(19) Europäisches Patentamt
European Patent Office
Office européen des brevets

(11) EP 3 013 106 A1

(12) EUROPEAN PATENT APPLICATION
published in accordance with Art. 153(4) EPC

(43) Date of publication:
27.04.2016 Bulletin 2016/17

(51) Int Cl.:
*H04W 52/30* (2009.01)

(21) Application number: 13889574.3

(22) Date of filing: 16.07.2013

(86) International application number:
PCT/CN2013/079447

(87) International publication number:
WO 2015/006914 (22.01.2015 Gazette 2015/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• MA, Xueli
Shenzhen
Guangdong 518129 (CN)
• HE, Chuanfeng
Shenzhen
Guangdong 518129 (CN)

(74) Representative: Epping - Hermann - Fischer
Patentanwaltsgesellschaft mbH
Schloßschmidstraße 5
80639 München (DE)

(54) CONTROL INFORMATION TRANSMISSION METHOD, USER EQUIPMENT AND BASE STATION

(57) The present invention discloses a method for transmitting control information, user equipment, and a base station. The method includes: determining a quantity of pre-known information bits in information bits of E-DPCCH control information, where the pre-known information bits represent information bits that can be learned in advance by a base station; determining a transmit power of an E-DPCCH according to the quantity of pre-known information bits; and sending the E-DPCCH control information to the base station by using the transmit power. The method for transmitting control information, the user equipment, and the base station of embodiments of the present invention can reduce a transmit power of an E-DPCCH and reduce uplink interference, thereby improving an uplink throughput.

100

Determine a quantity of pre-known information bits in information bits of E-DPCCH control information, where the pre-known information bits represent information bits that can be learned in advance by a base station — S110

Determine a transmit power of an E-DPCCH according to the quantity of pre-known information bits — S120

Send the E-DPCCH control information to the base station by using the transmit power — S130

FIG. 1

**Description**

**TECHNICAL FIELD**

The present invention relates to the field of communications, and in particular, to a method for transmitting control information, user equipment, and a base station.

**BACKGROUND**

Sending of an uplink control channel causes interference, which limits an uplink throughput. In an uplink enhancement (UL enhancement) topic of the 3rd Generation Partnership Project (3rd Generation Partnership Project, 3GPP) R12, to further improve an uplink throughput, overheads of an uplink control channel need to be reduced so as to reduce interference caused by sending of the uplink control channel.

**SUMMARY**

Embodiments of the present invention provide a method for transmitting control information, user equipment, and a base station, which can improve an uplink throughput.

According to a first aspect, a method for transmitting control information is provided, including: determining a quantity of pre-known information bits in information bits of enhanced dedicated physical control channel (E-DCH Dedicated Physical Control Channel, E-DPCCH) control information, where the pre-known information bits represent information bits that can be learned in advance by a base station; determining a transmit power of an E-DPCCH according to the quantity of pre-known information bits; and sending the E-DPCCH control information to the base station by using the transmit power.

In a first possible implementation manner, the determining a quantity of pre-known information bits in information bits of enhanced dedicated physical control channel E-DPCCH control information includes: determining, according to a service grant (Serving Grant, SG) sent by the base station and with reference to an enhanced transport format combination (E-DCH Transport Format Combination, E-TFC), a maximum data block length that can be selected, determining an enhanced transport format combination indicator (E-DCH Transport Format Combination Indicator, E-TFCI) corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

With reference to the first aspect or the first possible implementation manner of the first aspect, in a second possible implementation manner, the determining a quantity of pre-known information bits in information bits of enhanced dedicated physical control channel E-DPCCH control information includes: during initial data transmission, determining that the quantity of pre-known information bits includes a quantity of bits corresponding to a retransmission sequence number (Retransmission Sequence Number, RSN).

With reference to the first aspect or the first or second possible implementation manner of the first aspect, in a third possible implementation manner, the determining a quantity of pre-known information bits in information bits of enhanced dedicated physical control channel E-DPCCH control information includes: during data retransmission, determining that the quantity of pre-known information bits includes a quantity of bits corresponding to an E-TFCI in the E-DPCCH control information.

With reference to the first aspect or any possible implementation manner of the first to third possible implementation manners of the first aspect, in a fourth possible implementation manner, the determining a transmit power of an E-DPCCH according to the quantity of pre-known information bits includes: determining a power gain factor $\beta_{ec}$ of

the E-DPCCH according to an equation $\beta_{ec} = \beta_c \cdot A_{ec} \cdot \dfrac{2^{M-K}}{2^M}$ or $\beta_{ec} = \beta_c \cdot A_{ec} \cdot \dfrac{M-K}{M}$, where $\beta_c$ is a

power gain factor of a dedicated physical control channel (Dedicated Physical Control Channel, DPCCH), $A_{ec}$ is an amplitude ratio of the E-DPCCH to the DPCCH, $M$ is a quantity of information bits of the E-DPCCH control information, and $K$ is the quantity of pre-known information bits.

With reference to the first aspect or any possible implementation manner of the first to third possible implementation manners of the first aspect, in a fifth possible implementation manner, the determining a transmit power of an E-DPCCH according to the quantity of pre-known information bits includes: determining a power gain factor $\beta_{ec}$ of the E-DPCCH according to the quantity of pre-known information bits and a pre-configured correspondence between $\beta_{ec}$ and the quantity of pre-known information bits; or determining $\beta_{ec}$ according to the quantity of pre-known information bits, a pre-configured correspondence between $A_{ec}$ and the quantity of pre-known information bits, and an equation $\beta_{ec}$

$= \beta_c \cdot A_{ec}$, where $\beta_c$ is a power gain factor of a DPCCH, and $A_{ec}$ is an amplitude ratio of the E-DPCCH to the DPCCH.

With reference to the first possible implementation manner of the first aspect, in a sixth possible implementation manner, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

According to a second aspect, a method for transmitting control information is provided, including: receiving enhanced dedicated physical control channel E-DPCCH control information sent by user equipment UE; determining a quantity of pre-known information bits in information bits of the E-DPCCH control information; and decoding the E-DPCCH control information according to the quantity of pre-known information bits.

In a first possible implementation manner, the determining a quantity of pre-known information bits in information bits of the E-DPCCH control information includes: determining, according to a service grant SG sent to the UE and with reference to an enhanced transport format combination E-TFC, a maximum data block length that can be selected by the UE, determining an enhanced transport format combination indicator E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

With reference to the second aspect or the first possible implementation manner of the second aspect, in a second possible implementation manner, the determining a quantity of pre-known information bits in information bits of the E-DPCCH control information includes: during initial data transmission, determining that the quantity of pre-known information bits includes a quantity of bits corresponding to a retransmission sequence number RSN.

With reference to the second aspect or the first or second possible implementation manner of the second aspect, in a third possible implementation manner, the determining a quantity of pre-known information bits in information bits of the E-DPCCH control information includes: during data retransmission, determining that the quantity of pre-known information bits includes a quantity of bits corresponding to an E-TFCI in the E-DPCCH control information.

With reference to the second aspect or any possible implementation manner of the first to third possible implementation manners of the second aspect, in a fourth possible implementation manner, the decoding the E-DPCCH control information according to the quantity of pre-known information bits includes: determining, according to the following equation, decoding space $D$ for decoding the E-DPCCH control information: $D = 2^{M-K}$, where $M$ is a quantity of information bits of the E-DPCCH control information, and $K$ is the quantity of pre-known information bits; and decoding the E-DPCCH control information according to the decoding space.

With reference to the first possible implementation manner of the second aspect, in a fifth possible implementation manner, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

According to a third aspect, user equipment UE is provided, including: a first determining module, configured to determine a quantity of pre-known information bits in information bits of enhanced dedicated physical control channel E-DPCCH control information, where the pre-known information bits represent information bits that can be learned in advance by a base station; a second determining module, configured to determine a transmit power of an E-DPCCH according to the quantity of pre-known information bits; and a sending module, configured to send the E-DPCCH control information to the base station by using the transmit power.

In a first possible implementation manner, the first determining module is specifically configured to determine, according to a service grant SG sent by the base station and with reference to an enhanced transport format combination E-TFC, a maximum data block length that can be selected, determine an enhanced transport format combination indicator E-TFCI corresponding to the maximum data block length, and if a high-order bit of the E-TFCI corresponding to the maximum data block length is zero, determine that the quantity of pre-known information bits includes a quantity of bits corresponding to zeros in high-order bits of the E-TFCI corresponding to the maximum data block length.

With reference to the third aspect or the first possible implementation manner of the third aspect, in a second possible implementation manner, the first determining module is specifically configured to: during initial data transmission, determine that the quantity of pre-known information bits includes a quantity of bits corresponding to a retransmission sequence number RSN.

With reference to the third aspect or the first or second possible implementation manner of the third aspect, in a third possible implementation manner, the first determining module is specifically configured to: during data retransmission, determine that the quantity of pre-known information bits includes a quantity of bits corresponding to an E-TFCI in the E-DPCCH control information.

With reference to the third aspect or any possible implementation manner of the first to third possible implementation manners of the third aspect, in a fourth possible implementation manner, the second determining module is specifically configured to determine a power gain factor $\beta_{ec}$ of the E-DPCCH according to an equation

$$\beta_{ec} = \beta_c \cdot A_{ec} \cdot \frac{2^{M-K}}{2^M} \text{ or } \beta_{ec} = \beta_c \cdot A_{ec} \cdot \frac{M-K}{M},$$ where $\beta_c$ is a power gain factor of a DPCCH, $A_{ec}$ is an amplitude ratio of the E-DPCCH to the DPCCH, $M$ is a quantity of information bits of the E-DPCCH control information, and $K$ is the quantity of pre-known information bits.

With reference to the third aspect or any possible implementation manner of the first to third possible implementation manners of the third aspect, in a fifth possible implementation manner, the second determining module is specifically configured to determine a power gain factor $\beta ec$ of the E-DPCCH according to the quantity of pre-known information bits and a pre-configured correspondence between $\beta_{ec}$ and the quantity of pre-known information bits; or determine $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, where $\beta_c$ is a power gain factor of a DPCCH, and $A_{ec}$ is an amplitude ratio of the E-DPCCH to the DPCCH.

With reference to the first possible implementation manner of the third aspect, in a sixth possible implementation manner, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

According to a fourth aspect, a base station is provided, including: a receiving module, configured to receive enhanced dedicated physical control channel E-DPCCH control information sent by user equipment UE; a determining module, configured to determine a quantity of pre-known information bits in information bits of the E-DPCCH control information; and a decoding module, configured to decode the E-DPCCH control information according to the quantity of pre-known information bits.

In a first possible implementation manner, the determining module is specifically configured to determine, according to a service grant SG sent to the UE and with reference to an enhanced transport format combination E-TFC, a maximum data block length that can be selected by the UE, determine an enhanced transport format combination indicator E-TFCI corresponding to the maximum data block length, and if a high-order bit of the E-TFCI corresponding to the maximum data block length is zero, determine that the quantity of pre-known information bits includes a quantity of bits corresponding to zeros in high-order bits of the E-TFCI corresponding to the maximum data block length.

With reference to the fourth aspect or the first possible implementation manner of the fourth aspect, in a second possible implementation manner, the determining module is specifically configured to: during initial data transmission, determine that the quantity of pre-known information bits includes a quantity of bits corresponding to a retransmission sequence number RSN.

With reference to the fourth aspect or the first or second possible implementation manner of the fourth aspect, in a third possible implementation manner, the determining module is specifically configured to: during data retransmission, determine that the quantity of pre-known information bits includes a quantity of bits corresponding to an E-TFCI in the E-DPCCH control information.

With reference to the fourth aspect or any possible implementation manner of the first to third possible implementation manners of the fourth aspect, in a fourth possible implementation manner, the decoding module is specifically configured to: determine, according to the following equation, decoding space D for decoding the E-DPCCH control information: $D = 2^{M-K}$, where M is a quantity of information bits of the E-DPCCH control information, and K is the quantity of pre-known information bits; and decode the E-DPCCH control information according to the decoding space.

With reference to the first possible implementation manner of the fourth aspect, in a fifth possible implementation manner, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

According to a fifth aspect, user equipment UE is provided, including: a processor, a memory, an interface, and a bus, where the bus is configured to connect the processor, the memory, and the interface; the interface is configured to provide communication between the UE and a base station; the memory is configured to store a program; and the processor is configured to execute the program, where the program includes: determining a quantity of pre-known information bits in information bits of enhanced dedicated physical control channel E-DPCCH control information, where the pre-known information bits represent information bits that can be learned in advance by the base station; determining a transmit power of an E-DPCCH according to the quantity of pre-known information bits; and sending the E-DPCCH control information to the base station by using the transmit power.

In a first possible implementation manner, the determining a quantity of pre-known information bits in information bits of enhanced dedicated physical control channel E-DPCCH control information includes: determining, according to a service grant SG sent by the base station and with reference to an enhanced transport format combination E-TFC, a maximum data block length that can be selected, determining an enhanced transport format combination indicator E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

With reference to the fifth aspect or the first possible implementation manner of the fifth aspect, in a second possible implementation manner, the determining a quantity of pre-known information bits in information bits of enhanced dedicated physical control channel E-DPCCH control information includes: during initial data transmission, determining that the quantity of pre-known information bits includes a quantity of bits corresponding to a retransmission sequence number RSN.

With reference to the fifth aspect or the first or second possible implementation manner of the fifth aspect, in a third possible implementation manner, the determining a quantity of pre-known information bits in information bits of enhanced dedicated physical control channel E-DPCCH control information includes: during data retransmission, determining that the quantity of pre-known information bits includes a quantity of bits corresponding to an E-TFCI in the E-DPCCH control information.

With reference to the fifth aspect or any possible implementation manner of the first to third possible implementation manners of the fifth aspect, in a fourth possible implementation manner, the determining a transmit power of an E-DPCCH according to the quantity of pre-known information bits includes: determining a power gain factor $\beta_{ec}$ of the E-DPCCH according to an equation $\beta_{ec} = \beta_c \cdot A_{ec} \cdot \dfrac{2^{M-K}}{2^M}$ or $\beta_{ec} = \beta_c \cdot A_{ec} \cdot \dfrac{M-K}{M}$, where $\beta_c$ is a power gain factor of a dedicated physical control channel DPCCH, $A_{ec}$ is an amplitude ratio of the E-DPCCH to the DPCCH, $M$ is a quantity of information bits of the E-DPCCH control information, and $K$ is the quantity of pre-known information bits.

With reference to the fifth aspect or any possible implementation manner of the first to third possible implementation manners of the fifth aspect, in a fifth possible implementation manner, the determining a transmit power of an E-DPCCH according to the quantity of pre-known information bits includes: determining a power gain factor $\beta_{ec}$ of the E-DPCCH according to the quantity of pre-known information bits and a pre-configured correspondence between $\beta_{ec}$ and the quantity of pre-known information bits; or determining $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, where $\beta_c$ is a power gain factor of a DPCCH, and $A_{ec}$ is an amplitude ratio of the E-DPCCH to the DPCCH.

With reference to the first possible implementation manner of the fifth aspect, in a sixth possible implementation manner, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

According to a sixth aspect, a base station is provided, including: a processor, a memory, an interface, and a bus, where the bus is configured to connect the processor, the memory, and the interface; the interface is configured to provide communication between the base station and user equipment UE; the memory is configured to store a program; and the processor is configured to execute the program, where the program includes: receiving enhanced dedicated physical control channel E-DPCCH control information sent by the UE; determining a quantity of pre-known information bits in information bits of the E-DPCCH control information; and decoding the E-DPCCH control information according to the quantity of pre-known information bits.

In a first possible implementation manner, the determining a quantity of pre-known information bits in information bits of the E-DPCCH control information includes: determining, according to a service grant SG sent to the UE and with reference to an enhanced transport format combination E-TFC, a maximum data block length that can be selected by the UE, determining an enhanced transport format combination indicator E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

With reference to the sixth aspect or the first possible implementation manner of the sixth aspect, in a second possible implementation manner, the determining a quantity of pre-known information bits in information bits of the E-DPCCH control information includes: during initial data transmission, determining that the quantity of pre-known information bits includes a quantity of bits corresponding to a retransmission sequence number RSN.

With reference to the sixth aspect or the first or second possible implementation manner of the sixth aspect, in a third possible implementation manner, the determining a quantity of pre-known information bits in information bits of the E-DPCCH control information includes: during data retransmission, determining that the quantity of pre-known information bits includes a quantity of bits corresponding to an E-TFCI in the E-DPCCH control information.

With reference to the sixth aspect or any possible implementation manner of the first to third possible implementation manners of the sixth aspect, in a fourth possible implementation manner, the decoding the E-DPCCH control information according to the quantity of pre-known information bits includes: determining, according to the following equation, decoding space $D$ for decoding the E-DPCCH control information: $D = 2^{M-K}$, where $M$ is a quantity of information bits of the E-DPCCH control information, and $K$ is the quantity of pre-known information bits; and decoding the E-DPCCH control information according to the decoding space.

With reference to the first possible implementation manner of the sixth aspect, in a fifth possible implementation manner, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

Based on the foregoing technical solutions, in the embodiments of the present invention, a transmit power of an E-DPCCH is determined according to a quantity of pre-known information bits, which can reduce the transmit power of the E-DPCCH, reduce overheads of the E-DPCCH, and reduce uplink interference, thereby improving an uplink throughput.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of a method for transmitting control information according to an embodiment of the present invention;
FIG. 2 is a schematic flowchart of a method for transmitting control information according to another embodiment of the present invention;
FIG. 3 is a schematic block diagram of UE according to an embodiment of the present invention;
FIG. 4 is a schematic block diagram of a base station according to an embodiment of the present invention;
FIG. 5 is a schematic structural diagram of UE according to an embodiment of the present invention; and
FIG. 6 is a schematic structural diagram of a base station according to an embodiment of the present invention.

**DESCRIPTION OF EMBODIMENTS**

The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, GSM), a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD), a Universal Mobile Telecommunications System (Universal Mobile Telecommunication System, UMTS), or a Worldwide Interoperability for Microwave Access (Worldwide Interoperability for Microwave Access, WiMAX) communications system.

It should also be understood that, in the embodiments of the present invention, user equipment (User Equipment, UE) may be referred to as a terminal (Terminal), a mobile station (Mobile Station, MS), a mobile terminal (Mobile Terminal), and the like. The user equipment may communicate with one or more core networks by using a radio access network (Radio Access Network, RAN). For example, the user equipment may be a mobile phone (also referred to as a "cellular phone") or a computer with a mobile terminal. For example, the user equipment may also be a portable, pocket-sized, handheld, computer built-in, or in-vehicle mobile apparatus, which exchanges voice and/or data with the radio access network.

In the embodiments of the present invention, a base station may be a base station (Base Transceiver Station, BTS) in GSM or CDMA, may also be a base station (NodeB, NB) in WCDMA, and may further be an evolved NodeB (Evolutional Node B, ENB, or e-NodeB) in LTE, which is not limited in the present invention. For ease of description, the following embodiments are described by using a base station ENB and user equipment UE as an example.

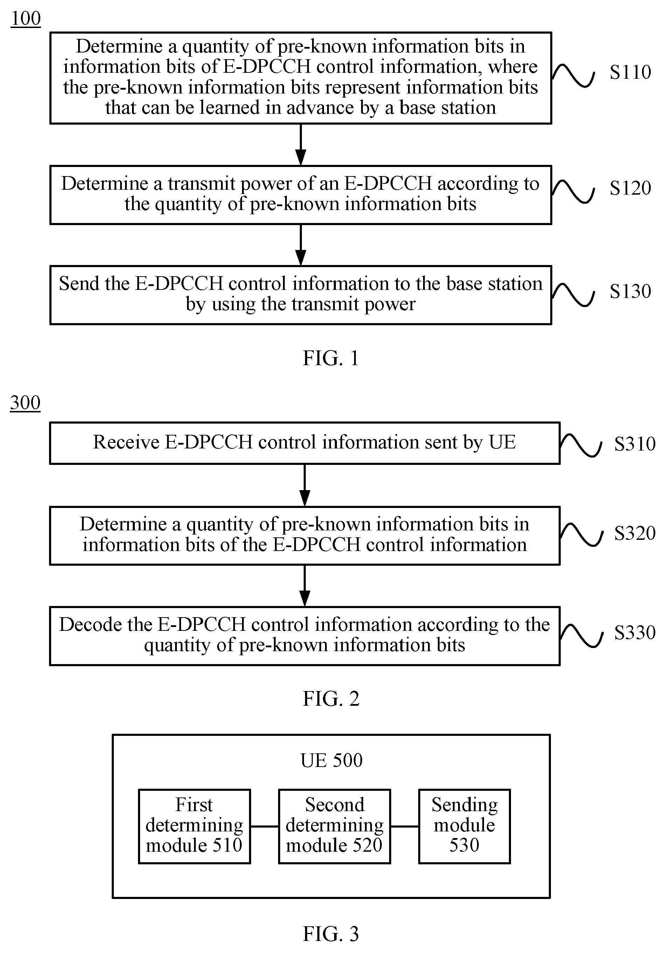

FIG. 1 is a schematic flowchart of a method 100 for transmitting control information according to an embodiment of the present invention. The method 100 is executed by UE, and as shown in FIG. 1, the method 100 includes:

> S110: Determine a quantity of pre-known information bits in information bits of E-DPCCH control information, where the pre-known information bits represent information bits that can be learned in advance by a base station.
> S120: Determine a transmit power of an E-DPCCH according to the quantity of pre-known information bits.
> S130: Send the E-DPCCH control information to the base station by using the transmit power.

In the prior art, decoding space in which a base station decodes E-DPCCH control information sent by UE is decoding space corresponding to all information bits of the E-DPCCH control information. For example, as shown in Table 1, an E-DPCCH channel carries 10-bit control information (that is, E-DPCCH control information has 10 information bits), including: a 7-bit data block E-TFCI (TFCI1 to TFCI7), a 2-bit RSN (RSN1 and RSN2), and one happy bit (happy bit). A 30-bit sequence is formed after the 10 bits undergo Reed-Muller (Reed-Muller) coding, and is carried on an E-DPCCH subframe. During decoding, the base station decodes the received 30-bit coded data according to decoding space to obtain the original 10-bit information. The 10 bits have 1024 possible values in total, and therefore, the decoding space is 1024. The base station finds a most probable combination from 1024 combinations, and uses it as 10-bit data obtained through decoding. To ensure decoding reliability, the UE needs to send the E-DPCCH control information at a relatively high transmit power.

**Table 1**

| 1 | 2 | 3 | 4 | 5 | 6 | 7 | 8 | 9 | 10 |
|---|---|---|---|---|---|---|---|---|---|
| Happy bit | RSN2 | RSN1 | TFCI7 | TFCI6 | TFCI5 | TFCI4 | TFCI3 | TFCI2 | TFCI1 |

In this embodiment of the present invention, UE first determines a quantity of pre-known information bits in information bits of E-DPCCH control information, where the pre-known information bits represent information bits that can be learned in advance by a base station, that is, the pre-known information bits can be predetermined by the base station, and do not need to be acquired from the E-DPCCH control information sent by the UE; and then determines a transmit power of an E-DPCCH according to the quantity of pre-known information bits and sends the E-DPCCH control information to the base station by using the transmit power. Because the pre-known information bits can be predetermined by the base station, when decoding the E-DPCCH control information, the base station may use decoding space that corresponds to information bits obtained after the pre-known information bits are removed, that is, the decoding space is no longer decoding space corresponding to all information bits of the E-DPCCH control information, that is, the decoding space is reduced. Because the decoding space is reduced, decoding reliability can be improved on the premise of a same transmit power of the E-DPCCH. In other words, the transmit power of the E-DPCCH can be reduced on the premise of ensuring a same decoding error probability. Therefore, the UE may determine a reduced transmit power of the E-DPCCH according to the quantity of pre-known information bits. The reduction in the transmit power can reduce uplink interference, thereby improving an uplink throughput.

Therefore, in the method for transmitting control information according to this embodiment of the present invention, a transmit power of an E-DPCCH is determined according to a quantity of pre-known information bits, which can reduce the transmit power of the E-DPCCH, reduce overheads of the E-DPCCH, and reduce uplink interference, thereby improving an uplink throughput.

In S110, UE determines a quantity of pre-known information bits in information bits of E-DPCCH control information.

In this embodiment of the present invention, the pre-known information bits represent information bits that can be learned in advance by a base station. In all the information bits of the E-DPCCH control information, some information bits can be predetermined by the base station, and do not need to be acquired from the E-DPCCH control information sent by the UE. For example, when a relatively small data block is scheduled, for example, an E-TFCI is less than 32, high-order bits TFCI7 and TFCI6 of the E-TFCI are always equal to 0, and therefore, in this case, the base station may predetermine that TFCI7 and TFCI6 are zero. For another example, during initial data transmission, RSN2 and RSN1 are zero, and during data retransmission, the entire E-TFCI may be used as prior information and predetermined.

Therefore, optionally, S110 includes:

determining, according to an SG sent by the base station and with reference to an E-TFC, a maximum data block length that can be selected, determining an E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

Specifically, the UE may calculate, according to the SG and with reference to the E-TFC, the maximum data block length that can be selected by the UE, so as to determine a value range of an E-TFCI in the E-DPCCH control information. In some scenarios, a scheduled data block is relatively small, and an E-TFCI has a relatively small value range, that is, a high-order bit of an E-TFCI corresponding to a maximum data block length that can be selected is zero. Therefore, high-order bits of the E-TFCI in the E-DPCCH control information are always zero. These bits that are always zero can be predetermined by the base station, and are pre-known information bits, and therefore, the quantity of pre-known information bits includes a quantity of these bits that are always zero, that is, includes the quantity of bits corresponding to zeros in the high-order bits of the E-TFCI corresponding to the maximum data block length. For example, the UE obtains, through calculation according to the SG and with reference to the E-TFC, that the E-TFCI corresponding to the maximum block length that can be selected by the UE is 31, that is, TFCI7 and TFCI6 are equal to 0. Therefore, TFCI7 and TFCI6 are pre-known information bits. Optionally, S110 includes:

during initial data transmission, determining that the quantity of pre-known information bits includes a quantity of bits corresponding to a retransmission sequence number RSN.

Specifically, during the initial data transmission, RSN2 and RSN1 are zero, and may be used as prior information and predetermined, and therefore, in this case, the bits corresponding to the RSN are pre-known information bits, and the quantity of pre-known information bits includes the quantity of bits corresponding to the RSN.

Optionally, S110 includes:

during data retransmission, determining that the quantity of pre-known information bits includes a quantity of bits corresponding to an E-TFCI in the E-DPCCH control information.

Specifically, during the data retransmission, because the E-TFCI is consistent with that during the initial transmission, the entire E-TFCI may be used as prior information and predetermined, and therefore, in this case, the quantity of pre-known information bits includes the quantity of bits corresponding to the E-TFCI in the E-DPCCH control information.

In S120, the UE determines a transmit power of an E-DPCCH according to the quantity of pre-known information bits.

Because the pre-known information bits can be predetermined by the base station, the UE may determine a relatively low transmit power of the E-DPCCH according to the quantity of pre-known information bits on the premise of ensuring same decoding reliability, that is, the UE may reduce the transmit power of the E-DPCCH according to the quantity of pre-known information bits.

The transmit power of the E-DPCCH is determined by a power gain factor $\beta ec$ of the E-DPCCH, where $\beta_{ec}$ is determined by using the following equation (1):

$$\beta_{ec} = \beta_c \cdot A_{ec} \quad (1),$$

where $\beta_c$ is a power gain factor of a DPCCH, and $A_{ec}$ is an amplitude ratio of the E-DPCCH to the DPCCH.

The existing equation (1) for calculating $\beta_{ec}$ is set according to decoding space of 1024. In this embodiment of

the present invention, $\beta_{ec}$ may be correspondingly reduced according to the quantity of pre-known information bits.

In this embodiment of the present invention, optionally, S120 includes:

determining $\beta_{ec}$ according to the following equation (2):

$$\beta_{ec} = \beta_c \cdot A_{ec} \cdot \frac{2^{M-K}}{2^M} \quad (2),$$

where

$M$ is a quantity of information bits of the E-DPCCH control information, *and K* is the quantity of pre-known information bits.

For example, in Table 1, $M$ is 10, and when TFCI7 and TFCI6 are pre-known information bits, K is 2.

In this embodiment of the present invention, optionally, S120 includes:

determining $\beta_{ec}$ according to the following equation (3):

$$\beta_{ec} = \beta_c \cdot A_{ec} \cdot \frac{M-K}{M} \quad (3).$$

That is, in this embodiment, $\beta_{ec}$ is adjusted according to a quantity $N$ of unknown information bits, where $N = M - K$.

In this embodiment of the present invention, optionally, S120 includes:

determining a power gain factor $\beta ec$ of the E-DPCCH according to the quantity of pre-known information bits and a pre-configured correspondence between $\beta_{ec}$ and the quantity of pre-known information bits; or

determining $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$.

Specifically, the transmit power of the E-DPCCH not only needs to meet a decoding performance requirement, but also needs to satisfy a detection decision threshold, and therefore, a transmit power adjusted in proportion according to a change in the quantity of pre-known information bits is not necessarily optimal. In this embodiment of the present invention, a manner of pre-configuring $\beta_{ec}$ or $A_{ec}$ is used. For example, for different quantities of pre-known information bits, corresponding $\beta_{ec}$ or $A_{ec}$ is pre-configured, that is, a correspondence between $\beta_{ec}$ or $A_{ec}$ and the quantity of pre-known information bits is pre-configured. In this way, after the quantity of pre-known information bits is determined, the transmit power of the E-DPCCH may be determined according to corresponding $\beta_{ec}$ or $A_{ec}$.

Optionally, the correspondence between $\beta_{ec}$ or $A_{ec}$ and the quantity of pre-known information bits may be one-to-one, one-to-many, or many-to-one, which is not limited in this embodiment of the present invention. For example, if the correspondence is one-to-many, that is, several values are pre-configured for one quantity of pre-known information bits, the UE voluntarily selects one from these values according to the quantity of pre-known information bits, or the base station explicitly notifies the UE of a value to be used.

Optionally, a pre-configured value of $\beta_{ec}$ or $A_{ec}$ may be an absolute value, or may be a relative value. For example, the relative value may be an adjustment value relative to $\beta_{ec}$ or $A_{ec}$ in the prior art, for example, a reduction of 1 dB, 2 dB or the like relative to $\beta_{ec}$ or $A_{ec}$ in the prior art.

It should be understood that, $\beta_{ec}$ or $A_{ec}$ may also be pre-configured in another manner, for example, a correspondence between $\beta_{ec}$ or $A_{ec}$ and the maximum data block length that can be selected may be pre-configured, or a correspondence between $\beta_{ec}$ or $A_{ec}$ and the SG may be pre-configured, which is not limited in this embodiment of the present invention.

In a case in which the correspondence between $\beta_{ec}$ or $A_{ec}$ and the maximum data block length that can be selected is pre-configured, after determining the maximum data block length that can be selected, the UE determines $\beta_{ec}$ or $A_{ec}$ according to the maximum data block length that can be selected and the pre-configured correspondence between $\beta_{ec}$ or $A_{ec}$ and the maximum data block length that can be selected.

In a case in which the correspondence between $\beta_{ec}$ or $A_{ec}$ and the SG is pre-configured, the UE determines $\beta_{ec}$ or $A_{ec}$ according to the SG and the pre-configured correspondence between $\beta_{ec}$ or $A_{ec}$ and the SG.

In S130, the UE sends the E-DPCCH control information to the base station by using the transmit power.

The UE sends the E-DPCCH control information by using a transmit power that is adjusted according to the quantity of pre-known information bits. The transmit power of the E-DPCCH that is adjusted according to the quantity of pre-known information bits is lower than a transmit power of an E-DPCCH in the prior art, so that uplink interference can be reduced, thereby improving an uplink throughput.

Therefore, in the method for transmitting control information according to this embodiment of the present invention, a transmit power of an E-DPCCH is determined according to a quantity of pre-known information bits, which can reduce the transmit power of the E-DPCCH, reduce overheads of the E-DPCCH, and reduce uplink interference, thereby improving an uplink throughput.

For convenience of decoding by the base station, a sequence of information carried by the E-DPCCH may be optimized, to centralize the decoding space in an area as far as possible.

Therefore, in this embodiment of the present invention, optionally, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information.

For example, a carrying sequence is shown in Table 2. In this way, when TFCI7 and TFCI6 are equal to 0, possible decoding results of the 10 bits fall within a range of 0 to 255.

**Table 2**

| 1 | 2 | 3 | 4 | 5 | 6 | 7 | 8 | 9 | 10 |
|---|---|---|---|---|---|---|---|---|---|
| TFCI7 | TFCI6 | TFCI5 | TFCI4 | TFCI3 | TFCI2 | TFCI1 | Happy bit | RSN2 | RSN1 |

Alternatively, optionally, an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

For example, a carrying sequence is shown in Table 3. In this way, when TFCI7 and TFCI6 are equal to 0, possible decoding results of the 10 bits fall within a range of 768 to 1023.

**Table 3**

| 1 | 2 | 3 | 4 | 5 | 6 | 7 | 8 | 9 | 10 |
|---|---|---|---|---|---|---|---|---|---|
| Happy bit | RSN2 | RSN1 | TFCI1 | TFCI2 | TFCI3 | TFCI4 | TFCI5 | TFCI6 | TFCI7 |

It should be understood that, the optimization of the carrying sequence is for the purpose of facilitating decoding, so as to reduce processing complexity of the base station, and the carrying sequence of the E-DPCCH control information is not limited in this embodiment of the present invention; furthermore, when the RSN or the happy bit is prior information, the carrying sequence may be further optimized; in addition, different carrying sequences may be used for different scenarios.

The method for transmitting control information according to this embodiment of the present invention is described in detail above from the perspective of UE, and a method for transmitting control information according to an embodiment of the present invention is described in detail below from the perspective of a base station:

FIG. 2 is a schematic flowchart of a method 300 for transmitting control information according to an embodiment of the present invention. The method 300 is executed by a base station, and as shown in FIG. 2, the method 300 includes:

S310: Receive E-DPCCH control information sent by UE.
S320: Determine a quantity of pre-known information bits in information bits of the E-DPCCH control information.
S330: Decode the E-DPCCH control information according to the quantity of pre-known information bits.

In this embodiment of the present invention, after receiving E-DPCCH control information sent by UE, a base station decodes the E-DPCCH control information according to a quantity of pre-known information bits in information bits of the E-DPCCH control information, instead of decoding the E-DPCCH control information according to all information bits of the E-DPCCH control information. In this way, decoding reliability can be improved on the premise of a same transmit power of an E-DPCCH. In other words, the transmit power of the E-DPCCH can be reduced on the premise of ensuring a same decoding error probability. The reduction in the transmit power can reduce uplink interference, thereby improving an uplink throughput.

Therefore, in the method for transmitting control information according to this embodiment of the present invention, E-DPCCH control information sent by UE is decoded according to a quantity of pre-known information bits, which can reduce uplink interference, thereby improving an uplink throughput.

In this embodiment of the present invention, the pre-known information bits represent information bits, which can be learned in advance by a base station, in the information bits of the E-DPCCH control information. In all the information bits of the E-DPCCH control information, some information bits can be predetermined by the base station, and do not need to be acquired from the E-DPCCH control information sent by the UE.

Optionally, S320 includes:

determining, according to an SG sent to the UE and with reference to an E-TFC, a maximum data block length that can be selected by the UE, determining an E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

Specifically, because the base station sends a grant command to the UE, the base station knows the SG of the UE. The base station may calculate, according to the SG and with reference to the E-TFC, the maximum data block length that can be selected by the UE, so as to determine a value range of an E-TFCI in the E-DPCCH control information. When an E-TFCI has a relatively small value range, that is, when a high-order bit of an E-TFCI corresponding to the maximum data block length that can be selected is zero, the high-order bits of the E-TFCI in the E-DPCCH control information are always zero. These bits that are always zero can be predetermined by the base station, and are pre-known information bits, and therefore, the quantity of pre-known information bits includes a quantity of these bits that are always zero, that is, includes the quantity of bits corresponding to zeros in the high-order bits of the E-TFCI corresponding to the maximum data block length. For example, the base station obtains, through calculation according to the SG of the UE and with reference to the E-TFC, that the E-TFCI corresponding to the maximum block length that can be selected by the UE is 31, that is, TFCI7 and TFCI6 are equal to 0. Therefore, TFCI7 and TFCI6 are pre-known information bits.

Optionally, S320 includes:

during initial data transmission, determining that the quantity of pre-known information bits includes a quantity of bits corresponding to a retransmission sequence number RSN.

Specifically, during the initial data transmission, RSN2 and RSN1 are zero, and may be used as prior information and predetermined, and therefore, in this case, the bits corresponding to the RSN are pre-known information bits, and the quantity of pre-known information bits includes the quantity of bits corresponding to the RSN.

Optionally, S320 includes:

during data retransmission, determining that the quantity of pre-known information bits includes a quantity of bits corresponding to an E-TFCI in the E-DPCCH control information.
Specifically, during the data retransmission, because the E-TFCI is consistent with that during the initial transmission, the entire E-TFCI may be used as prior information and predetermined, and therefore, in this case, the quantity of pre-known information bits includes the quantity of bits corresponding to the E-TFCI in the E-DPCCH control information.

After determining the quantity of pre-known information bits, the base station decodes the E-DPCCH control information according to the quantity of pre-known information bits.

Optionally, S330 includes:

determining, according to the following equation (4), decoding space D for decoding the E-DPCCH control information:

$$D = 2^{M-K} \quad (4),$$

where

M is a quantity of information bits of the E-DPCCH control information, and K is the quantity of pre-known information bits; and

decoding the E-DPCCH control information according to the decoding space.

That is, the base station first determines decoding space according to the quantity of pre-known information bits, and then decodes the E-DPCCH control information according to the decoding space.

When determining the decoding space D, the base station subtracts the quantity K of pre-known information bits from the total quantity M of information bits of the E-DPCCH control information, to obtain a quantity N of unknown information bits, where the decoding space D is decoding space corresponding to the quantity N of unknown information bits.

For example, when M is 10, the decoding space according to the prior art is 1024. When a scheduled data block is relatively small, for example, TFCI7 and TFCI6 are always equal to 0, and the quantity of pre-known information bits is 2, the quantity of unknown information bits is 8, and accordingly, it is obtained that the decoding space is 256, which is obviously reduced, compared with the decoding space in the prior art.

After determining the reduced decoding space according to the quantity of pre-known information bits, the base station decodes the E-DPCCH control information according to the decoding space. In this way, the UE can reduce the transmit power of the E-DPCCH according to the quantity of pre-known information bits, and the base station decodes the E-DPCCH control information by using the reduced decoding space, so that decoding reliability can be ensured in a case in which the transmit power of the E-DPCCH is reduced.

Therefore, in the method for transmitting control information according to this embodiment of the present invention, decoding space is determined according to a quantity of pre-known information bits, and E-DPCCH control information that is sent by UE by using a transmit power determined according to the quantity of pre-known information bits is decoded according to the decoding space, which can reduce a transmit power of an E-DPCCH, reduce overheads of the E-DPCCH, and reduce uplink interference, thereby improving an uplink throughput.

In this embodiment of the present invention, optionally, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information.

Alternatively, optionally, an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

It should be understood that, in this embodiment of the present invention, interaction between UE and a base station and related features and functions that are described from the perspective of the UE correspond to those described from the perspective of the base station, and for brevity, details are not described herein again.

It should be understood that, in the various embodiments of the present invention, sequence numbers of the foregoing processes do not indicate execution sequences, and should not be construed as any limitation to the implementation processes of the embodiments of the present invention; and the execution sequences of the processes should be determined according to functions and internal logic of the processes.

The methods for transmitting control information according to the embodiments of the present invention are described in detail above, and UE and a base station according to the embodiments of the present invention are described below:

FIG. 3 is a schematic block diagram of UE 500 according to an embodiment of the present invention. As shown in FIG. 3, the UE 500 includes:

a first determining module 510, configured to determine a quantity of pre-known information bits in information bits of enhanced dedicated physical control channel E-DPCCH control information, where the pre-known information bits represent information bits that can be learned in advance by a base station;
a second determining module 520, configured to determine a transmit power of an E-DPCCH according to the quantity of pre-known information bits; and
a sending module 530, configured to send the E-DPCCH control information to the base station by using the transmit power.

In this embodiment of the present invention, the first determining module 510 of the UE 500 determines a quantity of pre-known information bits in information bits of E-DPCCH control information, where the pre-known information bits represent information bits that can be learned in advance by a base station, that is, the pre-known information bits can be predetermined by the base station, and do not need to be acquired from the E-DPCCH control information sent by the UE; the second determining module 520 determines a transmit power of an E-DPCCH according to the quantity of pre-known information bits; and the sending module 530 sends the E-DPCCH control information to the base station by using the transmit power. Because the pre-known information bits can be predetermined by the base station, when decoding the E-DPCCH control information, the base station may use decoding space that corresponds to information bits obtained after the pre-known information bits are removed, that is, the decoding space is no longer decoding space corresponding to all information bits of the E-DPCCH control information, that is, the decoding space is reduced. Because the decoding space is reduced, decoding reliability can be improved on the premise of a same transmit power of the E-DPCCH. In other words, the transmit power of the E-DPCCH can be reduced on the premise of ensuring a same decoding error probability. Therefore, the UE may determine a reduced transmit power of the E-DPCCH according to the quantity of pre-known information bits. The reduction in the transmit power can reduce uplink interference, thereby improving an uplink throughput.

Therefore, the UE according to this embodiment of the present invention determines a transmit power of an E-DPCCH according to a quantity of pre-known information bits, which can reduce the transmit power of the E-DPCCH, reduce overheads of the E-DPCCH, and reduce uplink interference, thereby improving an uplink throughput.

In this embodiment of the present invention, optionally, the first determining module 510 is specifically configured to determine, according to a service grant SG sent by the base station and with reference to an enhanced transport format combination E-TFC, a maximum data block length that can be selected, determine an enhanced transport format combination indicator E-TFCI corresponding to the maximum data block length, and if a high-order bit of the E-TFCI corresponding to the maximum data block length is zero, determine that the quantity of pre-known information bits includes a quantity of bits corresponding to zeros in high-order bits of the E-TFCI corresponding to the maximum data block length.

In this embodiment of the present invention, optionally, the first determining module 510 is specifically configured to: during initial data transmission, determine that the quantity of pre-known information bits includes a quantity of bits corresponding to a retransmission sequence number RSN.

In this embodiment of the present invention, optionally, the first determining module 510 is specifically configured to: during data retransmission, determine that the quantity of pre-known information bits includes a quantity of bits corresponding to an E-TFCI in the E-DPCCH control information.

In this embodiment of the present invention, optionally, the second determining module 520 is specifically configured to determine a power gain factor $\beta ec$ of the E-DPCCH according to an equation $\beta_{ec} = \beta_c \cdot A_{ec} \cdot \dfrac{2^{M-K}}{2^M}$

or $\beta_{ec} = \beta_c \cdot A_{ec} \cdot \dfrac{M-K}{M}$, where $\beta_c$ is a power gain factor of a DPCCH, $A_{ec}$ is an amplitude ratio of the E-DPCCH to the DPCCH, $M$ is a quantity of information bits of the E-DPCCH control information, and $K$ is the quantity of pre-known information bits.

In this embodiment of the present invention, optionally, the second determining module 520 is specifically configured to determine a power gain factor $\beta ec$ of the E-DPCCH according to the quantity of pre-known information bits and a pre-configured correspondence between $\beta_{ec}$ and the quantity of pre-known information bits; or determine $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, where $\beta_c$ is a power gain factor of a DPCCH, and $A_{ec}$ is an amplitude ratio of the E-DPCCH to the DPCCH.

In this embodiment of the present invention, optionally, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or

an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

The UE 500 according to this embodiment of the present invention may correspond to the UE in the methods for transmitting control information according to the embodiments of the present invention, and the foregoing and other operations and/or functions of the modules in the UE 500 are separately used for implementing corresponding processes of the methods in FIG. 1 and FIG. 2. For brevity, details are not described herein again.

The UE according to this embodiment of the present invention determines a transmit power of an E-DPCCH according to a quantity of pre-known information bits, which can reduce the transmit power of the E-DPCCH, reduce overheads of the E-DPCCH, and reduce uplink interference, thereby improving an uplink throughput.

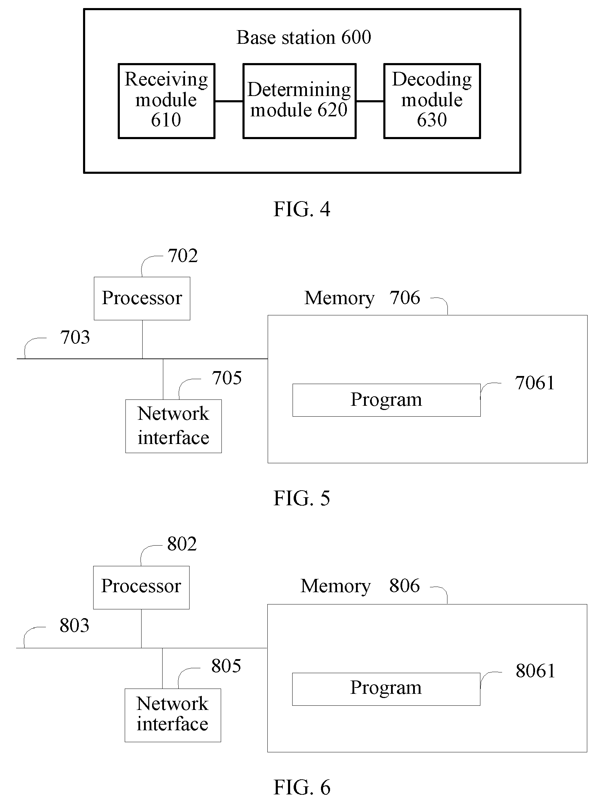

FIG. 4 is a schematic block diagram of a base station 600 according to an embodiment of the present invention. As shown in FIG. 4, the base station 600 includes:

a receiving module 610, configured to receive enhanced dedicated physical control channel E-DPCCH control information sent by user equipment UE;

a determining module 620, configured to determine a quantity of pre-known information bits in information bits of the E-DPCCH control information; and

a decoding module 630, configured to decode the E-DPCCH control information according to the quantity of pre-known information bits.

In this embodiment of the present invention, after receiving E-DPCCH control information sent by UE, the base station decodes the E-DPCCH control information according to a quantity of pre-known information bits in information bits of the E-DPCCH control information, instead of decoding the E-DPCCH control information according to all information bits of the E-DPCCH control information. In this way, decoding reliability can be improved on the premise of a same transmit power of an E-DPCCH. In other words, the transmit power of the E-DPCCH can be reduced on the premise of ensuring a same decoding error probability. The reduction in the transmit power can reduce uplink interference, thereby improving an uplink throughput.

Therefore, the base station according to this embodiment of the present invention decodes E-DPCCH control information sent by UE according to a quantity of pre-known information bits, which can reduce uplink interference, thereby improving an uplink throughput.

In this embodiment of the present invention, optionally, the determining module 620 is specifically configured to determine, according to a service grant SG sent to the UE and with reference to an enhanced transport format combination E-TFC, a maximum data block length that can be selected by the UE, determine an enhanced transport format combination indicator E-TFCI corresponding to the maximum data block length, and if a high-order bit of the E-TFCI corresponding to the maximum data block length is zero, determine that the quantity of pre-known information bits includes a quantity of bits corresponding to zeros in high-order bits of the E-TFCI corresponding to the maximum data block length.

In this embodiment of the present invention, optionally, the determining module 620 is specifically configured to: during initial data transmission, determine that the quantity of pre-known information bits includes a quantity of bits corresponding to a retransmission sequence number RSN.

In this embodiment of the present invention, optionally, the determining module 620 is specifically configured to: during data retransmission, determine that the quantity of pre-known information bits includes a quantity of bits corresponding to an E-TFCI in the E-DPCCH control information.

In this embodiment of the present invention, optionally, the decoding module 630 is specifically configured to: determine, according to the following equation, decoding space D for decoding the E-DPCCH control information: $D = 2^{M-K}$, where M is a quantity of information bits of the E-DPCCH control information, and K is the quantity of pre-known information bits; and decode the E-DPCCH control information according to the decoding space.

In this embodiment of the present invention, optionally, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or

an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

The base station 600 according to this embodiment of the present invention may correspond to the base station in the methods for transmitting control information according to the embodiments of the present invention, and the foregoing and other operations and/or functions of the modules in the base station 600 are separately used for implementing corresponding processes of the methods in FIG. 1 and FIG. 2. For brevity, details are not described herein again.

The base station according to this embodiment of the present invention determines decoding space according to a quantity of pre-known information bits, and decodes, according to the decoding space, E-DPCCH control information that is sent by UE by using a transmit power determined according to the quantity of pre-known information bits, which can reduce a transmit power of an E-DPCCH, reduce overheads of the E-DPCCH, and reduce uplink interference, thereby improving an uplink throughput.

FIG. 5 shows a structure of UE according to another embodiment of the present invention, which includes at least one processor 702 (for example, a CPU), at least one interface 705 or another communications interface, a memory 706, and at least one communications bus 703 that is configured to implement connection and communication between these components. The processor 702 is configured to execute an executable module stored in the memory 706, for example, a computer program. The memory 706 may include a high-speed random access memory (RAM: Random Access Memory), and may further include a non-volatile memory (non-volatile memory), for example, at least one magnetic disk memory. Communication and connection with at least one another device (for example, a base station) are implemented by using the at least one interface 705 (which may be wired or wireless).

In some implementation manners, the memory 706 stores a program 7061, where the program 7061 can be executed by the processor 702, and this program includes:

determining a quantity of pre-known information bits in information bits of enhanced dedicated physical control channel E-DPCCH control information, where the pre-known information bits represent information bits that can be learned in advance by a base station; determining a transmit power of an E-DPCCH according to the quantity of pre-known information bits; and sending the E-DPCCH control information to the base station by using the transmit power.

Optionally, the determining a quantity of pre-known information bits in information bits of enhanced dedicated physical control channel E-DPCCH control information includes: determining, according to a service grant SG sent by the base station and with reference to an enhanced transport format combination E-TFC, a maximum data block length that can be selected, determining an enhanced transport format combination indicator E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

Optionally, the determining a quantity of pre-known information bits in information bits of enhanced dedicated physical control channel E-DPCCH control information includes: during initial data transmission, determining that the quantity of pre-known information bits includes a quantity of bits corresponding to a retransmission sequence number RSN.

Optionally, the determining a quantity of pre-known information bits in information bits of enhanced dedicated physical control channel E-DPCCH control information includes: during data retransmission, determining that the quantity of pre-known information bits includes a quantity of bits corresponding to an E-TFCI in the E-DPCCH control information.

Optionally, the determining a transmit power of an E-DPCCH according to the quantity of pre-known information bits includes: determining a power gain factor $\beta_{ec}$ of the E-DPCCH according to an equation $\beta_{ec} = \beta_c \cdot A_{ec} \cdot \dfrac{2^{M-K}}{2^M}$

or $\beta_{ec} = \beta_c \cdot A_{ec} \cdot \dfrac{M-K}{M}$ , where $\beta_c$ is a power gain factor of a DPCCH, $A_{ec}$ is an amplitude ratio of the E-DPCCH to the DPCCH, $M$ is a quantity of information bits of the E-DPCCH control information, and $K$ is the quantity of pre-known information bits.

Optionally, the determining a transmit power of an E-DPCCH according to the quantity of pre-known information bits includes: determining a power gain factor $\beta_{ec}$ of the E-DPCCH according to the quantity of pre-known information bits and a pre-configured correspondence between $\beta_{ec}$ and the quantity of pre-known information bits; or determining $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, where $\beta_c$ is a power gain factor of a DPCCH, and $A_{ec}$ is an amplitude ratio of the E-DPCCH to the DPCCH.

Optionally, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

It can be seen from the foregoing technical solution provided in this embodiment of the present invention that, in this embodiment of the present invention, a transmit power of an E-DPCCH is determined according to a quantity of pre-known information bits, which can reduce the transmit power of the E-DPCCH, reduce overheads of the E-DPCCH, and reduce uplink interference, thereby improving an uplink throughput.

FIG. 6 shows a structure of a base station according to another embodiment of the present invention, which includes at least one processor 802 (for example, a CPU), at least one interface 805 or another communications interface, a memory 806, and at least one communications bus 803 that is configured to implement connection and communication between these components. The processor 802 is configured to execute an executable module stored in the memory 806, for example, a computer program. The memory 806 may include a high-speed random access memory (RAM: Random Access Memory), and may further include a non-volatile memory (non-volatile memory), for example, at least one magnetic disk memory. Communication and connection with at least one another device (for example, UE) are implemented by using the at least one interface 805 (which may be wired or wireless).

In some implementation manners, the memory 806 stores a program 8061, where the program 8061 may be executed by the processor 802, and this program includes:

receiving enhanced dedicated physical control channel E-DPCCH control information sent by user equipment UE; determining a quantity of pre-known information bits in information bits of the E-DPCCH control information; and decoding the E-DPCCH control information according to the quantity of pre-known information bits.

Optionally, the determining a quantity of pre-known information bits in information bits of the E-DPCCH control information includes: determining, according to a service grant SG sent to the UE and with reference to an enhanced transport format combination E-TFC, a maximum data block length that can be selected by the UE, determining an enhanced transport format combination indicator E-TFCI corresponding to the maximum data block length, and if a high-order bit of the E-TFCI corresponding to the maximum data block length is zero, determining that the quantity of pre-known information bits includes a quantity of bits corresponding to zeros in high-order bits of the E-TFCI corresponding to the maximum data block length.

Optionally, the determining a quantity of pre-known information bits in information bits of the E-DPCCH control information includes: during initial data transmission, determining that the quantity of pre-known information bits includes a quantity of bits corresponding to a retransmission sequence number RSN.

Optionally, the determining a quantity of pre-known information bits in information bits of the E-DPCCH control information includes: during data retransmission, determining that the quantity of pre-known information bits includes a quantity of bits corresponding to an E-TFCI in the E-DPCCH control information.

Optionally, the decoding the E-DPCCH control information according to the quantity of pre-known information bits includes: determining, according to the following equation, decoding space $D$ for decoding the E-DPCCH control information: $D = 2^{M-K}$, where $M$ is a quantity of information bits of the E-DPCCH control information, and K is the quantity of pre-known information bits; and decoding the E-DPCCH control information according to the decoding space.

Optionally, an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

It can be seen from the foregoing technical solution provided by this embodiment of the present invention that, in this embodiment of the present invention, E-DPCCH control information sent by UE is decoded according to a quantity of pre-known information bits, which can reduce uplink interference, thereby improving an uplink throughput.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units can be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for transmitting control information, comprising:

   determining a quantity of pre-known information bits in information bits of enhanced dedicated physical control channel E-DPCCH control information, wherein the pre-known information bits represent information bits that can be learned in advance by a base station;
   determining a transmit power of an E-DPCCH according to the quantity of pre-known information bits; and
   sending the E-DPCCH control information to the base station by using the transmit power.

2. The method according to claim 1, wherein the determining a quantity of pre-known information bits in information bits of enhanced dedicated physical control channel E-DPCCH control information comprises:

   determining, according to a service grant SG sent by the base station and with reference to an enhanced transport format combination E-TFC, a maximum data block length that can be selected, determining an enhanced transport format combination indicator E-TFCI corresponding to the maximum data block length, and if a high-order bit of the E-TFCI corresponding to the maximum data block length is zero, determining that the quantity of pre-known information bits comprises a quantity of bits corresponding to zeros in high-order bits of the E-TFCI corresponding to the maximum data block length.

3. The method according to claim 1 or 2, wherein the determining a quantity of pre-known information bits in information bits of enhanced dedicated physical control channel E-DPCCH control information comprises:

   during initial data transmission, determining that the quantity of pre-known information bits comprises a quantity of bits corresponding to a retransmission sequence number RSN.

4. The method according to any one of claims 1 to 3, wherein the determining a quantity of pre-known information bits in information bits of enhanced dedicated physical control channel E-DPCCH control information comprises:

   during data retransmission, determining that the quantity of pre-known information bits comprises a quantity of bits corresponding to an E-TFCI in the E-DPCCH control information.

5. The method according to any one of claims 1 to 4, wherein the determining a transmit power of an E-DPCCH according to the quantity of pre-known information bits comprises:

   determining a power gain factor $\beta ec$ of the E-DPCCH according to an equation $\beta_{ec} = \beta_c \cdot A_{ec} \cdot \dfrac{2^{M-K}}{2^M}$ or

   $\beta_{ec} = \beta_c \cdot A_{ec} \cdot \dfrac{M-K}{M}$, wherein $\beta_c$ is a power gain factor of a dedicated physical control channel DPCCH,

$A_{ec}$ is an amplitude ratio of the E-DPCCH to the DPCCH, $M$ is a quantity of information bits of the E-DPCCH control information, and K is the quantity of pre-known information bits.

6. The method according to any one of claims 1 to 4, wherein the determining a transmit power of an E-DPCCH according to the quantity of pre-known information bits comprises:

   determining a power gain factor $\beta_{ec}$ of the E-DPCCH according to the quantity of pre-known information bits and a pre-configured correspondence between $\beta_{ec}$ and the quantity of pre-known information bits; or
   determining $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, wherein $\beta_c$ is a power gain factor of a DPCCH, and $A_{ec}$ is an amplitude ratio of the E-DPCCH to the DPCCH.

7. The method according to claim 2, wherein
   an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or
   an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

8. A method for transmitting control information, comprising:

   receiving enhanced dedicated physical control channel E-DPCCH control information sent by user equipment UE;
   determining a quantity of pre-known information bits in information bits of the E-DPCCH control information; and
   decoding the E-DPCCH control information according to the quantity of pre-known information bits.

9. The method according to claim 8, wherein the determining a quantity of pre-known information bits in information bits of the E-DPCCH control information comprises:

   determining, according to a service grant SG sent to the UE and with reference to an enhanced transport format combination E-TFC, a maximum data block length that can be selected by the UE, determining an enhanced transport format combination indicator E-TFCI corresponding to the maximum data block length, and if a high-order bit of the E-TFCI corresponding to the maximum data block length is zero, determining that the quantity of pre-known information bits comprises a quantity of bits corresponding to zeros in high-order bits of the E-TFCI corresponding to the maximum data block length.

10. The method according to claim 8 or 9, wherein the determining a quantity of pre-known information bits in information bits of the E-DPCCH control information comprises:

    during initial data transmission, determining that the quantity of pre-known information bits comprises a quantity of bits corresponding to a retransmission sequence number RSN.

11. The method according to any one of claims 8 to 10, wherein the determining a quantity of pre-known information bits in information bits of the E-DPCCH control information comprises:

    during data retransmission, determining that the quantity of pre-known information bits comprises a quantity of bits corresponding to an E-TFCI in the E-DPCCH control information.

12. The method according to any one of claims 8 to 11, wherein the decoding the E-DPCCH control information according to the quantity of pre-known information bits comprises:

    determining, according to the following equation, decoding space $D$ for decoding the E-DPCCH control information:

$$D = 2^{M-K},$$

wherein

$M$ is a quantity of information bits of the E-DPCCH control information, *and K* is the quantity of pre-known information bits; and

decoding the E-DPCCH control information according to the decoding space.

13. The method according to claim 9, wherein

an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or

an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

14. User equipment UE, comprising:

a first determining module, configured to determine a quantity of pre-known information bits in information bits of enhanced dedicated physical control channel E-DPCCH control information, wherein the pre-known information bits represent information bits that can be learned in advance by a base station;

a second determining module, configured to determine a transmit power of an E-DPCCH according to the quantity of pre-known information bits; and

a sending module, configured to send the E-DPCCH control information to the base station by using the transmit power.

15. The UE according to claim 14, wherein the first determining module is specifically configured to determine, according to a service grant SG sent by the base station and with reference to an enhanced transport format combination E-TFC, a maximum data block length that can be selected, determine an enhanced transport format combination indicator E-TFCI corresponding to the maximum data block length, and if a high-order bit of the E-TFCI corresponding to the maximum data block length is zero, determine that the quantity of pre-known information bits comprises a quantity of bits corresponding to zeros in high-order bits of the E-TFCI corresponding to the maximum data block length.

16. The UE according to claim 14 or 15, wherein the first determining module is specifically configured to: during initial data transmission, determine that the quantity of pre-known information bits comprises a quantity of bits corresponding to a retransmission sequence number RSN.

17. The UE according to any one of claims 14 to 16, wherein the first determining module is specifically configured to: during data retransmission, determine that the quantity of pre-known information bits comprises a quantity of bits corresponding to an E-TFCI in the E-DPCCH control information.

18. The UE according to any one of claims 14 to 17, wherein the second determining module is specifically configured to determine a power gain factor *βec* of the E-DPCCH according to an equation $\beta_{ec} = \beta_c \cdot A_{ec} \cdot \dfrac{2^{M-K}}{2^M}$ or

$\beta_{ec} = \beta_c \cdot A_{ec} \cdot \dfrac{M-K}{M}$, wherein $\beta_c$ is a power gain factor of a dedicated physical control channel DPCCH,

$A_{ec}$ is an amplitude ratio of the E-DPCCH to the DPCCH, *M* is a quantity of information bits of the E-DPCCH control information, and *K* is the quantity of pre-known information bits.

19. The UE according to any one of claims 14 to 17, wherein the second determining module is specifically configured to determine a power gain factor *βec* of the E-DPCCH according to the quantity of pre-known information bits and a pre-configured correspondence between $\beta_{ec}$ and the quantity of pre-known information bits; or determine $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, wherein $\beta_c$ is a power gain factor of a DPCCH, and $A_{ec}$ is an amplitude ratio of the E-DPCCH to the DPCCH.

20. The UE according to claim 15, wherein
an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or
an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

21. Abase station, comprising:

a receiving module, configured to receive enhanced dedicated physical control channel E-DPCCH control information sent by user equipment UE;
a determining module, configured to determine a quantity of pre-known information bits in information bits of the E-DPCCH control information; and
a decoding module, configured to decode the E-DPCCH control information according to the quantity of pre-known information bits.

22. The base station according to claim 21, wherein the determining module is specifically configured to determine, according to a service grant SG sent to the UE and with reference to an enhanced transport format combination E-TFC, a maximum data block length that can be selected by the UE, determine an enhanced transport format combination indicator E-TFCI corresponding to the maximum data block length, and if a high-order bit of the E-TFCI corresponding to the maximum data block length is zero, determine that the quantity of pre-known information bits comprises a quantity of bits corresponding to zeros in high-order bits of the E-TFCI corresponding to the maximum data block length.

23. The base station according to claim 21 or 22, wherein the determining module is specifically configured to: during initial data transmission, determine that the quantity of pre-known information bits comprises a quantity of bits corresponding to a retransmission sequence number RSN.

24. The base station according to any one of claims 21 to 23, wherein the determining module is specifically configured to: during data retransmission, determine that the quantity of pre-known information bits comprises a quantity of bits corresponding to an E-TFCI in the E-DPCCH control information.

25. The base station according to any one of claims 21 to 24, wherein the decoding module is specifically configured to: determine, according to the following equation, decoding space $D$ for decoding the E-DPCCH control information: $D = 2^{M-K}$, wherein $M$ is a quantity of information bits of the E-DPCCH control information, and $K$ is the quantity of pre-known information bits; and decode the E-DPCCH control information according to the decoding space.

26. The base station according to claim 22, wherein
an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or
an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

27. User equipment UE, comprising: a processor, a memory, an interface, and a bus, wherein
the bus is configured to connect the processor, the memory, and the interface;
the interface is configured to provide communication between the UE and a base station; the memory is configured to store a program; and the processor is configured to execute the program, wherein the program comprises:

determining a quantity of pre-known information bits in information bits of enhanced dedicated physical control channel E-DPCCH control information, wherein the pre-known information bits represent information bits that can be learned in advance by the base station;
determining a transmit power of an E-DPCCH according to the quantity of pre-known information bits; and

sending the E-DPCCH control information to the base station by using the transmit power.

**28.** The UE according to claim 27, wherein the determining a quantity of pre-known information bits in information bits of enhanced dedicated physical control channel E-DPCCH control information comprises:

determining, according to a service grant SG sent by the base station and with reference to an enhanced transport format combination E-TFC, a maximum data block length that can be selected, determining an enhanced transport format combination indicator E-TFCI corresponding to the maximum data block length, and if a high-order bit of the E-TFCI corresponding to the maximum data block length is zero, determining that the quantity of pre-known information bits comprises a quantity of bits corresponding to zeros in high-order bits of the E-TFCI corresponding to the maximum data block length.

**29.** The UE according to claim 27 or 28, wherein the determining a quantity of pre-known information bits in information bits of enhanced dedicated physical control channel E-DPCCH control information comprises:

during initial data transmission, determining that the quantity of pre-known information bits comprises a quantity of bits corresponding to a retransmission sequence number RSN.

**30.** The UE according to any one of claims 27 to 29, wherein the determining a quantity of pre-known information bits in information bits of enhanced dedicated physical control channel E-DPCCH control information comprises:

during data retransmission, determining that the quantity of pre-known information bits comprises a quantity of bits corresponding to an E-TFCI in the E-DPCCH control information.

**31.** The UE according to any one of claims 27 to 30, wherein the determining a transmit power of an E-DPCCH according to the quantity of pre-known information bits comprises:

determining a power gain factor $\beta ec$ of the E-DPCCH according to an equation $\beta_{ec} = \beta_c \cdot A_{ec} \cdot \dfrac{2^{M-K}}{2^M}$ or

$$\beta_{ec} = \beta_c \cdot A_{ec} \cdot \dfrac{M-K}{M}, \text{ wherein}$$

$\beta_c$ is a power gain factor of a dedicated physical control channel DPCCH, $A_{ec}$ is an amplitude ratio of the E-DPCCH to the DPCCH, $M$ is a quantity of information bits of the E-DPCCH control information, and $K$ is the quantity of pre-known information bits.

**32.** The UE according to any one of claims 27 to 30, wherein the determining a transmit power of an E-DPCCH according to the quantity of pre-known information bits comprises:

determining a power gain factor $\beta ec$ of the E-DPCCH according to the quantity of pre-known information bits and a pre-configured correspondence between $\beta_{ec}$ and the quantity of pre-known information bits; or determining $\beta_{ec}$ according to the quantity of pre-known information bits, a pre-configured correspondence between $A_{ec}$ and the quantity of pre-known information bits, and an equation $\beta_{ec} = \beta_c \cdot A_{ec}$, wherein $\beta_c$ is a power gain factor of a DPCCH, and $A_{ec}$ is an amplitude ratio of the E-DPCCH to the DPCCH.

**33.** The UE according to claim 28, wherein
an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or
an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

**34.** A base station, comprising: a processor, a memory, an interface, and a bus, wherein
the bus is configured to connect the processor, the memory, and the interface;
the interface is configured to provide communication between the base station and user equipment UE;
the memory is configured to store a program; and the processor is configured to execute the program, wherein the program comprises:

receiving enhanced dedicated physical control channel E-DPCCH control information sent by the UE;
determining a quantity of pre-known information bits in information bits of the E-DPCCH control information; and
decoding the E-DPCCH control information according to the quantity of pre-known information bits.

35. The base station according to claim 34, wherein the determining a quantity of pre-known information bits in information bits of the E-DPCCH control information comprises:

determining, according to a service grant SG sent to the UE and with reference to an enhanced transport format combination E-TFC, a maximum data block length that can be selected by the UE, determining an enhanced transport format combination indicator E-TFCI corresponding to the maximum data block length, and if a high-order bit of the E-TFCI corresponding to the maximum data block length is zero, determining that the quantity of pre-known information bits comprises a quantity of bits corresponding to zeros in high-order bits of the E-TFCI corresponding to the maximum data block length.

36. The base station according to claim 34 or 35, wherein the determining a quantity of pre-known information bits in information bits of the E-DPCCH control information comprises:

during initial data transmission, determining that the quantity of pre-known information bits comprises a quantity of bits corresponding to a retransmission sequence number RSN.

37. The base station according to any one of claims 34 to 36, wherein the determining a quantity of pre-known information bits in information bits of the E-DPCCH control information comprises:

during data retransmission, determining that the quantity of pre-known information bits comprises a quantity of bits corresponding to an E-TFCI in the E-DPCCH control information.

38. The base station according to any one of claims 34 to 37, wherein the decoding the E-DPCCH control information according to the quantity of pre-known information bits comprises:

determining, according to the following equation, decoding space $D$ for decoding the E-DPCCH control information:

$$D = 2^{M-K},$$

wherein
$M$ is a quantity of information bits of the E-DPCCH control information, *and* $K$ is the quantity of pre-known information bits; and
decoding the E-DPCCH control information according to the decoding space.

39. The base station according to claim 35, wherein
an E-TFCI in the E-DPCCH control information is carried on positions of high-order bits in the information bits of the E-DPCCH control information, and a most significant bit of the E-TFCI in the E-DPCCH control information is carried on a most significant bit in the information bits of the E-DPCCH control information; or
an E-TFCI in the E-DPCCH control information is carried on positions of low-order bits in the information bits of the E-DPCCH control information, and a most significant bit of the E-TFCI in the E-DPCCH control information is carried on a least significant bit in the information bits of the E-DPCCH control information.

100

| Determine a quantity of pre-known information bits in information bits of E-DPCCH control information, where the pre-known information bits represent information bits that can be learned in advance by a base station | S110 |

↓

| Determine a transmit power of an E-DPCCH according to the quantity of pre-known information bits | S120 |

↓

| Send the E-DPCCH control information to the base station by using the transmit power | S130 |

FIG. 1

300

| Receive E-DPCCH control information sent by UE | S310 |

↓

| Determine a quantity of pre-known information bits in information bits of the E-DPCCH control information | S320 |

↓

| Decode the E-DPCCH control information according to the quantity of pre-known information bits | S330 |

FIG. 2

| UE 500 |
| First determining module 510 — Second determining module 520 — Sending module 530 |

FIG. 3

Base station 600

| Receiving module 610 | Determining module 620 | Decoding module 630 |

FIG. 4

Processor 702

703

705

Network interface

Memory 706

Program 7061

FIG. 5

Processor 802

803

805

Network interface

Memory 806

Program 8061

FIG. 6

## INTERNATIONAL SEARCH REPORT

| International application No. |
| --- |
| **PCT/CN2013/079447** |

**A. CLASSIFICATION OF SUBJECT MATTER**

H04W 52/30 (2009.01) i

According to International Patent Classification (IPC) or to both national classification and IPC

**B. FIELDS SEARCHED**

Minimum documentation searched (classification system followed by classification symbols)

H04W, H04B

Documentation searched other than minimum documentation to the extent that such documents are included in the fields searched

Electronic data base consulted during the international search (name of data base and, where practicable, search terms used)

WPI, EPODOC, IEEE, CNKI, CNPAT: reinforce special physical control channel, pre-, information bit, 0, transmission format combination indicator, transmission power, base station, control information, data initial transmission, data retransmission, E-DPCCH, TFCI, digit, bit, digital, predict, information, zero, power, control, base, station, transfer, RSN

**C. DOCUMENTS CONSIDERED TO BE RELEVANT**

| Category* | Citation of document, with indication, where appropriate, of the relevant passages | Relevant to claim No. |
| --- | --- | --- |
| A | WO 2012094241 A1 (INTERDIGITAL PATENT HOLDINGS, INC. et al.), 12 July 2012 (12.07.2012), description, paragraphs [0044]-[0107], and claims 1-14 | 1-39 |
| A | CN 1461535 A (SAMSUNG ELECTRONICS CO., LTD.), 10 December 2003 (10.12.2003), the whole document | 1-39 |
| A | CN 102577222 A (TELEFONAKTIEBOLAGET L M ERICSSON), 11 July 2012 (11.07.2012), the whole document | 1-39 |

☐ Further documents are listed in the continuation of Box C.     ☒ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 10 April 2014 (10.04.2014) | **23 April 2014 (23.04.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAO, Jingjing** Telephone No.: (86-10) **62413334** |
| --- | --- |

Form PCT/ISA/210 (second sheet) (July 2009)

## INTERNATIONAL SEARCH REPORT
### Information on patent family members

| | International application No. |
|---|---|
| | **PCT/CN2013/079447** |

| Patent Documents referred in the Report | Publication Date | Patent Family | Publication Date |
|---|---|---|---|
| WO 2012094241 A1 | 12 July 2012 | EP 2661820 A1 | 13 November 2013 |
| | | US 2012177089 A1 | 12 July 2012 |
| | | CN 103283155 A | 04 September 2013 |
| | | TW 201242310 A | 16 October 2012 |
| CN 1461535 A | 10 December 2003 | DE 10208410 A1 | 31 October 2002 |
| | | JP 2002344360 A | 29 November 2002 |
| | | US 2002162073 A1 | 31 October 2002 |
| | | AU 1872602 A | 29 August 2002 |
| | | EP 1237292 A2 | 04 September 2002 |
| | | GB 2377352 A | 08 January 2003 |
| | | KR 20020070160 A | 05 September 2002 |
| | | WO 02069514 A1 | 06 September 2002 |
| | | GB 2387751 A | 22 October 2003 |
| CN 102577222 A | 11 July 2012 | EP 2489145 A1 | 22 August 2012 |
| | | US 2011292887 A1 | 01 December 2011 |
| | | JP 2013507877 A | 04 March 2013 |
| | | WO 2011046486 A1 | 21 April 2011 |
| | | HK 1172754 A0 | 26 April 2013 |

Form PCT/ISA/210 (patent family annex) (July 2009)